# EUROPÄISCHE PATENTSCHRIFT

(11) **EP 2 554 461 B1**
(45) Veröffentlichungstag und Bekanntmachung des Hinweises auf die Patenterteilung: **06.05.2015**
(21) Anmeldenummer: 12176242.1
(22) Anmeldetag: 13.07.2012
(51) Int. Cl.: B62H 3/00, B25H 1/00

(54) **Montageständer für Motorräder**
Assembly stand for motorbikes
Support de montage pour motos

(30) Priorität: 01.08.2011 DE 202011103943 U
(43) Veröffentlichungstag der Anmeldung: 06.02.2013
(73) Patentinhaber: Brecher, Michael, 40764 Langenfeld (DE); Brecher, Bernd, 40764 Langenfeld (DE); Brecher, Udo, 40764 Langenfeld (DE); Bilcar, Aleksandar, 40698 Erkrath (DE)
(72) Erfinder: Brecher, Michael, 40764 Langenfeld (DE); Brecher, Bernd, 40764 Langenfeld (DE); Brecher, Udo, 40764 Langenfeld (DE); Bilcar, Aleksandar, 40698 Erkrath (DE)
(74) Vertreter: Vomberg, Friedhelm

(56) Entgegenhaltungen:
- DE-A1- 10 211 252
- US-A1- 2009 184 217

## Beschreibung

Die Erfindung betrifft einen Montageständer für Motorräder, der eine Säule aufweist, entlang der in längsaxialer, vertikaler Richtung ein Schlitten heb- und senkbar geführt ist, der mindestens einen Aufnahmedorn zur Motorradbefestigung besitzt. Das Heben und Senken wird mittels einer über einen Schwenkhebel betätigbaren Gelenkverbindung möglich. Der Schlitten ist in den beiden Endpositionen fixierbar.

Solche Montageständer sind prinzipiell aus der DE 102 11 252 A1 bekannt.

Montageständer für Motorräder werden benötigt, wenn Reinigungs- oder Reparaturarbeiten an dem Zweirad vorgenommen werden müssen.

Gegenüber Hubgeräten für Pkw ergibt sich bei Motorrädern die Besonderheit, dass diese beim Hub stabilisiert werden müssen. Einfache Hubplattformen, die hydraulisch heb- und senkbar sind, reichen ohne eine zusätzliche Fixierung der Maschine nicht aus. Es sind auch vereinzelt Montageständer vorgeschlagen worden, die jeweils am Vorder- oder Hinterrad angesetzt werden und ein einseitiges Heben ermöglichen. Bisweilen ist es jedoch erforderlich, für Reparaturarbeiten das Motorrad so anzuheben, dass beide Räder und auch die Federaufhängung entlastet sind.

Der eingangs genannte Montageständer hat gegenüber anderen Hubvorrichtungen zudem den Vorteil, dass er platzsparend aufbewahrt werden kann.

Zum Anheben des Motorrads werden die Motorradständer seitlich an das Motorrad geführt und der Aufnahmebolzen in eine am Motorrad vorgesehene Aufnahme eingeschoben, wonach der Schwenkhebel betätigt und über die Gelenkverbindung der vorhandene Schlitten, an dem der Aufnahmedorn befestigt ist, angehoben wird. Bei der in der DE 102 11 252 A1 beschriebenen Vorrichtung ist entweder die Gelenkverbindung selbstarretierend ausgebildet oder der Schlitten ist über einen Sicherungsbolzen, der in kongruent zueinander geführte Bohrungen des Schlittens und der Säule steckbar ist, abgesichert. Die untere Position kann durch einen Anschlag der Säule realisiert werden, der den Hubweg des Schlittens nach unten begrenzt.

Prinzipiell ist es auch möglich, entlang der Säule mehrere im Abstand voneinander angeordnete Bohrungen anzuordnen, die jeweils mit einer Bohrung des Schlittens in eine Deckungslage gebracht werden können, wonach der Sicherungsbolzen einsteckbar ist. Allerdings erfordert die Handhabung einer solchen Konstruktion ein relativ großes Geschick und einen nicht unerheblichen Kraftaufwand, der mit einer Hand aufzuwenden ist, da die andere Hand für das Durchstecken des Sicherungsbolzens benötigt wird. Sowohl beim Einstecken des Sicherungsbolzens als auch beim Lösen ist ein Verklemmen nicht auszuschließen.

Es ist daher Aufgabe der vorliegenden Erfindung, den vorbeschriebenen Montageständer dahingehend weiterzuentwickeln, dass weitere individuelle Höheneinstellungen ohne größeren technischen Aufwand möglich sind. Die Konstruktion soll einfach aufgebaut und leicht handhabbar sein.

Diese Aufgabe wird durch einen Montageständer nach Anspruch 1 gelöst.

Erfindungsgemäß weist die Gelenkverbindung einen Zahnkranz auf, in dessen Vertiefungen ein Querbolzen zur Arretierung weiterer individueller Höheneinstellungen einschiebbar ist.

Der Vorteil einer solchen Ausbildung besteht darin, dass der Einschub eines Querbolzens in die Zahnkranzvertiefungen erheblich leichter möglich ist, da auch bei ungenauen Positionierungen stets eine entsprechende Zentrierung des Bolzens erleichtert ist.

Vorzugsweise ist der Querbolzen in der Arretierungsstellung federbelastet, so dass die gewünschte Verriegelungsstellung über die Federkraft erreicht wird.

Um zu gewährleisten, dass der Querbolzen nur dann mittels Federkraft in die entsprechende Zahnkranzvertiefung gepresst wird, ist nach einer weiteren Ausgestaltung vorgesehen, dass der Querbolzen mit einer Halterung verbunden ist, die einen Stellstift aufweist, der in einer Führung mit einer horizontal und einer vertikalen Führungsbahn bewegbar ist. Diese Bahnen sind rechtwinklig zueinander angeordnet. Solange der Stellstift in der Horizontalbahn geführt ist, liegt der Querbolzen im Abstand zum Zahnkranz, so dass ein problemloses Betätigen des Schwenkhebels und Anheben des Motorrads über den Schlitten möglich ist. Bei Erreichen einer gewünschten Hubhöhe wird der Stellstift in den Bereich der Vertikalführung geschoben, wonach die Halterung mit dem Querbolzen angehoben wird und der Querbolzen selbsttätig in die sich anbietende nächste Zahnlücke des Zahnkranzes einschnappt. Der Querbolzen 21 ist horizontal freischwimmend in einem Langloch gelagert. In Verriegelung drückt eine Feder 23 permanent gegen den Querbolzen 23. Wenn der Bediener der Vorrichtung das Motorrad anhebt und der Querbolzen 21 in der gewünschten Position einrastet, ist es ohne weiteres möglich, die Feder 23 zu entriegeln, ohne dass das Motorrad herabfällt, da es durch das Eigengewicht des Motorrads verriegelt bleibt. Erst durch einen leichten Druck des Schwenkhebels 17 fällt der Querbolzen 21 in seine unterste Position und das Motorrad kann herabgelassen werden. Dies ist z. B. im Rennsport interessant, da hier jede Sekunde zählt.

Wie prinzipiell nach dem Stand der Technik bekannt, ist die Säule an mehreren fußartigen Profilen, vorzugsweise an Rechteckprofilen befestigt. Die Rechteckprofile sowie deren Anzahl und deren Anordnung und Länge richten sich nach der gewünschten Standfläche. Vorzugsweise werden die Rechteckprofile so angeordnet, dass sich ausschließlich parallel zur Längsachse des zu hebenden Motorrads und in Richtung des Motorrads, jedoch nicht in entgegengesetzte Richtung des Motorrads, ausgerichtet sind. Hierdurch wird gewährleistet, dass die Fläche neben dem Motorrad frei begehbar ist.

Nach einer weiteren Ausführung der Erfindung ist der Zahnkranz als Drehachse in der Säule gelagert und an dem Schwenkhebel derart befestigt, dass dieser zweiarmig mit einem kurzen Lastarm ausgebildet ist, an dessen Ende eine Schwinge drehbeweglich angelenkt ist, deren anderes Ende über eine Verlängerungsstange mit dem Schlitten verbunden ist. Die Verlängerungsstange ist vorzugsweise als Spindel ausgebildet, die in ein Gewinde des Schlittens eingreift, so dass bei Bedarf die Höhe des Schlittens voreinstellbar ist.

Die Anordnung des Zahnkranzes als Drehachse gewährleistet eine kippsichere stabile Handhabung, da Querkräfte, die bei der Betätigung des Schwenkhebels in einer dezentralen Lage auftreten können, weitgehend vermieden werden.

Die Ausbildung eines langen Kraftarmes gegenüber einem kurzen Lastarm liefert größtmögliche Hubkräfte, die über die Verlängerungsstange auf den Schlitten geführt werden.

Nach einer besonderen Ausgestaltung der vorliegenden Erfindung besteht der Schlitten im Wesentlichen aus einem Rechteck-Hohlprofil, das über die Säule mit einem entsprechend ausgebildeten Rechteckprofil geführt wird. Das Rechteck-Hohlprofil des Schlittens hat ein Innenmaß, das bis auf ein geringes Spiel mit dem Außenmaß der rechteckigen Säule übereinstimmt.

Eine weitere Verbesserung der Gleiteigenschaft des Schlittens auf der Säule wird erzielt, wenn die sich jeweils gegenüberliegenden Führungsflächen der Säule und des Rechteck-Hohlprofils des Schlittens eine PTFE-Gleitbelagbeschichtung aufweist.

Um die Bedienbarkeit des Schwenkhebels zu erleichtern, ist dieser vorzugsweise gekröpft.

Weitere Details und Vorteile der Erfindung werden anhand der Zeichnungen erläutert. Es zeigen:
- Fig. 1: eine perspektivische Ansicht des erfindungsgemäßen Montageständers,
- Fig. 2: eine Detailansicht des Bereiches der Führung für den Stellstift,
- Fig. 3, 4: jeweils Seitenansichten des Montageständers bei abgesenktem Schlitten,
- Fig. 5: eine Detailansicht des oberen Bereiches des Montageständers,
- Fig. 6, 7: jeweils Seitenansichten des Montageständers mit angehobenem Schlitten und
- Fig. 8: eine Detailansicht des betreffenden Montageständers.

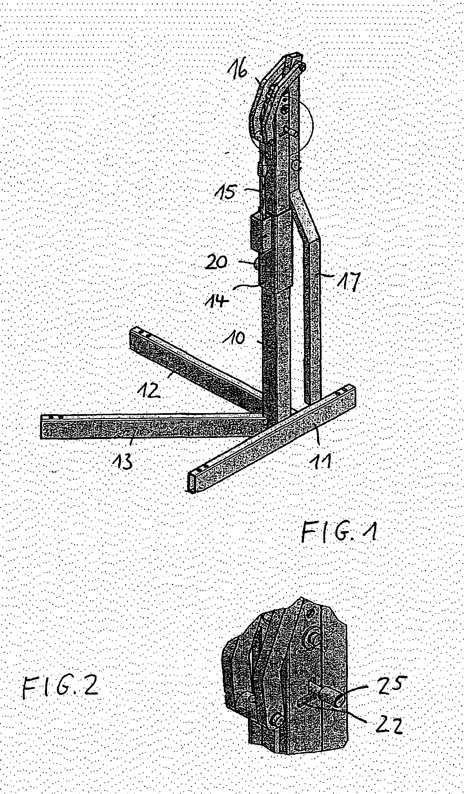

Wie Fig. 1 zu entnehmen ist, besitzt der Montageständer eine Säule 10, die mit Rechteckprofilen 11, 12 und 13 zu einem Ständerwerk verbunden ist. Die Rechteckprofile 11, 12 und 13 sind derart mit der Säule verbunden, dass die Profile 11 und 12 in einem rechten Winkel zueinander und das Rechteckprofil 13 jeweils zu den genannten Profilen in einem spitzen Winkel angeordnet ist. Die Profile 11, 12 und 13 sowie die Säule 10 sind miteinander verschweißt. Gegebenenfalls können die Profile 11, 12 und 13 noch mit Rollen verbunden werden (nicht dargestellt). Die Säule 10 besitzt ein Rechteckprofil, entlang dessen Längsachse in vertikaler Richtung ein Schlitten 14 geführt wird, der über eine als Spindel ausgebildete Verlängerungsstange 15 an einer Schwinge 16 gelenkig befestigt ist. Das andere Ende der Schwinge 16 ist an den Schwenkhebel 17 gelenkig angelenkt, der auch fest mit einem Zahnkranz 18 verbunden ist, der im vorliegenden Fall fünf Vertiefungen aufweist. Die Schwinge 16 ist als Doppel-Blechschwinge ausgebildet, die über zwei jeweilige Traversen miteinander verbunden sind, die auch gleichzeitig den Anlenkpunkt für die Verbindungsstange 15 und den Schwenkhebel 17 bilden. Der Schwenkhebel 17 ist gekröpft ausgebildet.

Fig. 1 stellt die Position des Montageständers dar, in der der Schlitten angehoben ist. An dem Schlitten 14 sind Aufnahmedorne 20 angebracht, die in entsprechende Einschubhülsen an dem zu hebenden Motorrad eingeführt werden können.

Die Anordnung der Dorne 20 ist individuell auf das jeweilige Motorrad bzw. den jeweiligen Motorradtyp abgestimmt. Um bei einem Wechsel des Motorrads den Montageständer weiter verwenden zu können, muss entweder der Schlitten 14 ausgetauscht werden oder eine an dem Schlitten 14 befestigte Vorrichtung, die als Träger für die Dorne 20 dient. Dieser Träger ist vorzugsweise über eine Schraubverbindung lösbar an dem Schlitten 14 befestigt. Eine Höhenvoreinstellung des Schlittens relativ zur Säule 10 lässt sich im Übrigen auch über die Spindel (Verlängerungsstange 15) bewirken, die in einem Gewinde des Schlittens und/oder eines Querbolzens der Schwinge montiert ist.

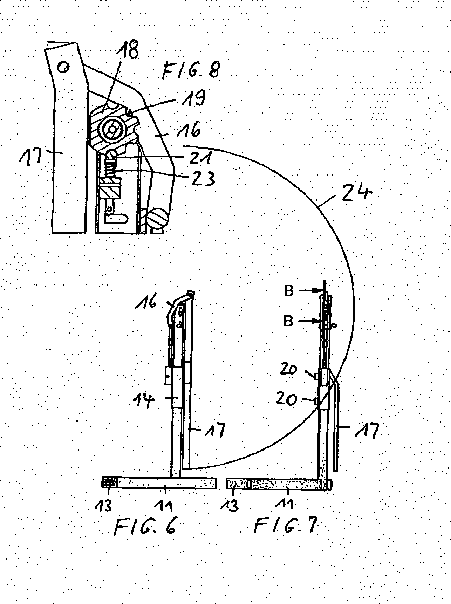

Wie insbesondere aus Fig. 2 und Fig. 8 hervorgeht, dient ein Querbolzen 21 als Arretierungsmittel, welches in eine der fünf Vertiefungen 19 eingreift. Der mit dem Querbolzen verbundene Stellstift 25 wird entlang einer Führung 22 bewegt, die eine horizontale Führungsbahn und eine vertikale Führungsbahn besitzt. Solange der Stellstift 25 in der horizontalen Führungsbahn liegt, befindet sich der Querbolzen 21 in einer zu dem Zahnkranz bzw. der Vertiefung 19 beabstandeten Stellung, die ein freies Drehen des Zahnkranzes erlaubt. Wird jedoch, wie in Fig. 2 und Fig. 8 dargestellt, der Stellstift 25 in den vertikalen Teil der Führungsbahn überführt, kann der Querbolzen 21 durch Unterstützung der Feder 23 in eine Vertiefung 19 rutschen, deren Öffnung nach unten gerichtet ist. Die Vertiefungen 19 des Zahnkranzes 18 sind äquidistanten Winkelmaßen angeordnet, so dass entsprechend dem Schwenkwinkel des Schwenkhebels 17 unterschiedliche Höheneinstellungen des Schlittens und damit des Aufnahmedorns 20 bzw. der Aufnahmedorne 20 möglich sind.

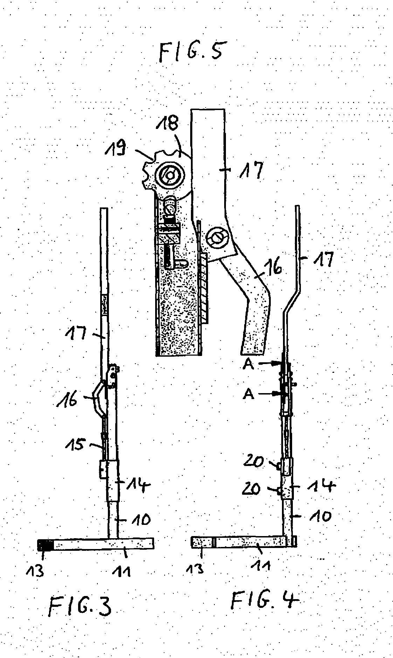

Fig. 3 bis 5 zeigen den Montageständer in der Ausgangsposition, d. h. mit abgesenktem Schlitten 14. In dieser Position ist der Querbolzen 21 dearretiert. Der Schwenkhebel 17 befindet sich in einer mit seinem freien Ende nach oben weisenden Stellung.

Die Höhe der Aufnahmedorne 20 bzw. deren Anordnung ist auf das anzuhebende Motorrad abgestimmt, so dass der Montageständer mit seinen Dornen nur seitlich in die entsprechenden Aufnahmehülsen des Motorrads geführt werden muss. Hiernach wird der Schwenkhebel, wie durch den Halbkreisbogen 24 in Fig. 6 bis 8 angedeutet, um das gewünschte Winkelmaß bis maximal 160° geschwenkt. Bei voller Schwenkung um 180° nimmt der Schwenkhebel die in Fig. 6, 7 und 8 dargestellte Position ein, d. h. dass der Schwenkhebel mit seinem freien Ende zur Standfläche des Montageständers weist. Zur Arretierung ist der Querbolzen 21 in die (letzte) Vertiefung 19 des Zahnrades eingeführt.

Zwischen der in Fig. 3 bis 5 und in Fig. 6 bis 8 jeweils dargestellten Endposition sind noch beliebige Zwischenstellungen möglich, bei denen der Schwenkhebel 17 und ein Winkelmaß von 45°, 90° oder 135° verschwenkt ist, so dass der Schlitten und damit das Motorrad in verschiedenen Zwischenhöhen durch Einführung des Querbolzens in die Verriegelung arretierbar ist.

Die Anzahl sowie der Abstand der Vertiefung können auch anders als im dargestell-ten Fall gewählt werden.

Der besondere Vorteil der vorliegenden Erfindung liegt darin, dass der Schlitten des Montageständers und damit das hieran befestigte Motorrad auf unterschiedliche Hubhöhen eingestellt werden kann, so dass ein jeweils optimiertes Arbeiten möglich wird.

## Patentansprüche

1. Montageständer für Motorräder mit einer Säule (10), entlang der in längsaxialer vertikaler Richtung ein mindestens einen Aufnahmedorn (20) zur Motorradbefestigung aufweisender Schlitten (14) mittels einer über einen Schwenkhebel (17) betätigbaren Gelenkverbindung (15, 16) heb- und senkbar sowie in zwei Endpositionen fixierbar ist,
**dadurch gekennzeichnet, dass**
die Gelenkverbindung einen Zahnkranz (18) aufweist, in dessen Vertiefungen (19) ein Querbolzen (21) zur Arretierung weiterer individueller Höheneinstellungen einschiebbar ist.

2. Montageständer nach Anspruch 1, **dadurch gekennzeichnet, dass** der Querbolzen (21) in der Arretierungsstellung federbelastet ist.

3. Montageständer nach einem der Ansprüche 1 oder 2, **dadurch gekennzeichnet, dass** der Querbolzen (21) mit einer Halterung verbunden ist, die einen Stellstift (25) aufweist, der in einer Führung (22) mit einer horizontalen und einer vertikalen Führungsbahn bewegbar ist.

4. Montageständer nach Anspruch 1, **dadurch gekennzeichnet, dass** die Säule (10) an mehreren fußartigen Profilen, vorzugsweise an Rechteckprofilen (11, 12, 13) befestigt ist.

5. Montageständer nach einem der Ansprüche 1 bis 4, **dadurch gekennzeichnet, dass** der Zahnkranz (18) als Drehachse in der Säule (10) gelagert und an den Schwenkhebel (17) so befestigt ist, dass dieser zweiarmig mit einem kurzen Lastarm ausgebildet ist, an dessen Ende eine Schwinge (16) drehbeweglich angelenkt ist, deren anderes Ende über eine Verlängerungsstange (15), die vorzugsweise als Spindel ausgebildet ist, mit dem Schlitten (14) verbunden ist.

6. Montageständer nach einem der Ansprüche 1 bis 5, **dadurch gekennzeichnet, dass** der Schlitten (14) im wesentlichen aus einem Rechteck-Hohlprofil besteht, das über die Säule (10) mit einem entsprechend ausgebildeten Rechteckprofil geführt wird.

7. Montageständer nach Anspruch 6, **dadurch gekennzeichnet, dass** die gegenseitigen Führungsflächen der Säule (10) und des Rechteck-Hohlprofils des Schlittens (14) eine PTFE-Gleitbelagbeschichtung aufweisen.

8. Montageständer nach Anspruch 1, **dadurch gekennzeichnet, dass** der Schwenkhebel (17) gekröpft ist.

## Claims

1. Assembly stand for motorbikes with a post (10) along which a slide (14) having at least one arbor (20) for the motorbike-fixation can be lifted and lowered in longitudinal direction by means of hinge joint (15, 16) via a lever (17) as well as fixable in two end positions,
**characterised in that**
the hinge joint has a gear rim (18) with notches (19) wherein a transverse bolt (21) can be inserted to lock different elevation levels.

2. Assembly stand according to claim 1, **characterised in that** the transverse bolt (21) is spring-loaded in the locking position

3. Assembly stand according to claim 1 or 2, **characterised in that** the transverse bold (21) is connected with an attachment provided with an adjusting pin (25) being movable in a guiding (22) with a horizontal and a vertical slideway

4. Assembly stand according to claim 1, **characterised in that** the post (19) is mounted on several foot-like profiles, preferably on rectangle-profiles (11, 12, 13)

5. Assembly stand according to one of the claims 1 to 4, **characterised in that** the gear rim (18) is mounted as rotation axis in the post (19) and is affixed to the lever (17) such that the lever is formed two-armed with a short load-arm, at the end of which a linkage (16) is hinged free for rotation movements, its other end is connected with the slide (14) via an extension bar (15) which is preferably formed a spindle

6. Assembly stand according to one of the claims 1 to 5, **characterised in that** the slide (14) consists essentially of a rectangle-hollow-profile which is guided along the post (10) with a corresponding rectangle-profile

7. Assembly stand according to claim 6, **characterised in that** the guiding surfaces of the post (10) and of the rectangle-hollow-profile of the slide (14) facing each other are provided with a PTFE-slide bearing-coating

8. Assembly stand according to claim 1, **characterised in** the lever (17) is cranked.

## Revendications

1. Support de montage pour motocyclettes, comprenant une colonne (10) le long de laquelle, dans la direction verticale de l'axe longitudinal, on peut faire monter et descendre au moyen d'un joint d'articulation apte à être actionné par un levier pivotant (17) ainsi que fixer dans deux positions extrêmes un chariot (14) présentant au moins un mandrin de réception (20) de fixation de motocyclette,
**caractérisé par le fait que**
ledit joint d'articulation présente une couronne dentée (18) dans les creux (19) de laquelle peut être introduit un boulon transversal (21) pour arrêter d'autres réglages individuels en hauteur.

2. Support de montage selon la revendication 1, **caractérisé par le fait que** ledit boulon transversal (21) est chargé par ressort dans la position d'arrêt.

3. Support de montage selon l'une quelconque des revendications 1 ou 2, **caractérisé par le fait que** ledit boulon transversal (21) est relié à un support qui présente une goupille de réglage (25) qui est déplaçable dans un guide (22) ayant une glissière horizontale et une glissière verticale.

4. Support de montage selon la revendication 1, **caractérisé par le fait que** ladite colonne (10) est fixée sur une pluralité de profilés de type pied, de préférence sur des profilés rectangulaires (11, 12, 13).

5. Support de montage selon l'une quelconque des revendications 1 à 4, **caractérisé par le fait que** ladite couronne dentée (18) est logée comme axe de rotation dans la colonne (10) et est fixée sur le levier pivotant (17) de telle manière que celui-ci est réalisé à deux bras avec un court bras de puissance à l'extrémité duquel est articulée mobile en rotation une bielle oscillante (16) dont l'autre extrémité est reliée au chariot (14) par l'intermédiaire d'une tige de rallonge (15) qui est réalisée de préférence en tant que broche.

6. Support de montage selon l'une quelconque des revendications 1 à 5, **caractérisé par le fait que** ledit chariot (14) se compose pour l'essentiel d'un profilé creux rectangulaire qui est guidé sur la colonne (10) ayant un profilé rentangulaire réalisé de manière correspondante.

7. Support de montage selon la revendication 6, **caractérisé par le fait que** les surfaces de guidage mutuelles de la colonne (10) et du profilé creux rectangulaire du chariot (14) présentent un revêtement de glissement en PTFE.

8. Support de montage selon la revendication 1, **caractérisé par le fait que** ledit levier pivotant (17) est coudé.
